# EUROPÄISCHE PATENTSCHRIFT

(11) **EP 4 187 102 B1**
(45) Veröffentlichungstag und Bekanntmachung des Hinweises auf die Patenterteilung: **15.10.2025**
(21) Anmeldenummer: 22208679.5
(22) Anmeldetag: 21.11.2022
(51) Int. Cl.: F04D 19/00, F04D 27/00, F16K 1/00, F24F 7/013, F24F 13/14

(54) **STELLVENTIL, INSBESONDERE FÜR EINE LÜFTUNGSEINRICHTUNG, VERFAHREN ZUM BETREIBEN EINES STELLVENTILS SOWIE LÜFTUNGSEINRICHTUNG MIT EINEM STELLVENTIL**
CONTROL VALVE, IN PARTICULAR FOR A VENTILATION DEVICE, METHOD FOR OPERATING A CONTROL VALVE AND VENTILATION DEVICE WITH A CONTROL VALVE
SOUPAPE DE RÉGLAGE, EN PARTICULIER POUR UN DISPOSITIF DE VENTILATION, PROCÉDÉ DE FONCTIONNEMENT D'UNE SOUPAPE DE RÉGLAGE AINSI QUE DISPOSITIF DE VENTILATION DOTÉ D'UNE SOUPAPE DE RÉGLAGE

(30) Priorität: 25.11.2021 DE 102021213286
(43) Veröffentlichungstag der Anmeldung: 31.05.2023
(73) Patentinhaber: MAICO Elektroapparate-Fabrik GmbH, 78056 Villingen-Schwenningen (DE)
(72) Erfinder: Stricker, Klaus, 78658 Zimmern (DE); Sattler, Andreas, 78532 Tuttlingen (DE)
(74) Vertreter: Dietz, Christopher Friedrich

(56) Entgegenhaltungen:
- EP-A1- 4 080 131
- EP-A2- 2 282 135
- EP-B1- 2 231 985
- WO-A1-81/01606
- JP-A- 2014 202 416

## Beschreibung

Die Erfindung betrifft ein Stellventil, insbesondere für eine Lüftungseinrichtung, mit einem in einem Ventilgehäuse des Stellventils ausgebildeten Strömungskanal, wobei in dem Strömungskanal ein Ventilelement zum Einstellen einer Durchströmungsquerschnittsfläche des Strömungskanals angeordnet ist. Die Erfindung betrifft weiterhin ein Verfahren zum Betreiben eines Stellventils für eine Lüftungseinrichtung sowie eine Lüftungseinrichtung mit einem Stellventil.

Aus dem Stand der Technik ist beispielsweise die Druckschrift DE 195 28 302 C2 bekannt. Diese betrifft eine Verschlussvorrichtung für eine lufttechnische Einrichtung, insbesondere für einen Ventilator, mit mehreren um ihre Längsachse verschwenkbar angeordneten Lamellen und mit einer Betätigungsvorrichtung zum Verschwenken der Lamellen aus einer Schließstellung in eine Öffnungsstellung und umgekehrt, wobei die Lamellen so angeordnet sind, dass sie in Schließstellung eine zu den Längsachsen gewölbte, vorzugsweise konvex nach außen gewölbte, Fläche bilden. Dabei ist vorgesehen, dass die Betätigungsvorrichtung die Lamellen mit unterschiedlichem Mitnahmespiel in ihrer Öffnungsstellung verschränkt, derart, dass sie in der Öffnungsstellung den gleichen beziehungsweise in etwa den gleichen Öffnungswinkel zu einer gemeinsamen Bezugsebene aufweisen WO 81/01606 A1 offenbart auch ein Stellventil nach dem Oberbegriff des Anspruchs 1.

Es ist Aufgabe der Erfindung, ein Stellventil vorzuschlagen, welches gegenüber bekannten Stellventilen Vorteile aufweist, insbesondere ein präzises Einstellen der Durchströmungsquerschnittsfläche des Strömungskanals ermöglicht und gleichzeitig einen hierzu verwendeten Stellantrieb zuverlässig vor äußeren Einflüssen, beispielsweise durch ein in dem Strömungskanal strömendes Fluid, schützt.

Dies wird erfindungsgemäß mit einem Stellventil für eine Lüftungseinrichtung mit den Merkmalen des Anspruchs 1 erreicht. Dabei ist vorgesehen, dass das Ventilelement bezüglich einer Längsmittelachse des Strömungskanals axial verlagerbar ist und mit einem Ventilsitz in einer ersten Axialstellung zum Einstellen einer ersten Durchströmungsquerschnittsfläche des Strömungskanals und in einer zweiten Axialstellung zum Einstellen einer von der ersten Durchströmungsquerschnittsfläche verschiedenen zweiten Durchströmungsquerschnittsfläche des Strömungskanals zusammenwirkt, wobei das Ventilelement bezüglich einer Längsmittelachse des Strömungskanals in Umfangsrichtung mittels einer Führungseinrichtung festgesetzt und in axialer Richtung mittels eines einen elektrischen Stellmotor aufweisenden Stellantriebs antreibbar ist, wobei der Stellantrieb kontaktlos über eine Magnetverbindungsvorrichtung antriebstechnisch an das Ventilelement angeschlossen ist, wobei die Magnetverbindungsvorrichtung eine an den Stellantrieb antriebstechnisch angebundene erste Magnetverbindungseinrichtung und eine magnetisch mit der ersten Magnetverbindungseinrichtung zusammenwirkende und an das Ventilelement antriebstechnisch angebundene zweite Magnetverbindungseinrichtung aufweist, sodass die erste Magnetverbindungseinrichtung lediglich mittelbar über die zweite Magnetverbindungseinrichtung mit dem Ventilelement antriebstechnisch verbunden ist, und wobei der Stellantrieb in einer Stellantriebsaufnahme eines in dem Strömungskanal vorliegenden Antriebsgehäuses angeordnet ist, wobei die erste Magnetverbindungseinrichtung einerseits einer Wand und die zweite Magnetverbindungseinrichtung andererseits der Wand angeordnet ist, sodass zwischen den Magnetverbindungseinrichtungen eine durch die Wand verlaufende Magnetverbindung vorliegt.

Vorteilhafte Ausgestaltungen mit zweckmäßigen Weiterbildungen der Erfindung sind in den abhängigen Ansprüchen angegeben.

Das Stellventil ist bevorzugt Bestandteil der Lüftungseinrichtung, kann jedoch auch separat von dieser vorliegen. Die Lüftungseinrichtung dient insbesondere dem Lüften eines Raums, vorzugsweise eines Innenraums eines Gebäudes. Unter dem Lüften kann ein Belüften und/oder ein Entlüften verstanden werden. Das Belüften bezeichnet ein Zuführen von Fluid, insbesondere Luft, in den Raum, wohingegen das Entlüften ein Abführen des Fluids aus dem Raum beschreibt. Zum Lüften des Raums verfügt die Lüftungseinrichtung bevorzugt über einen Ventilator, der zur Förderung des Fluids beziehungsweise eines Fluidstroms aus dem Fluid durch den Strömungskanal vorgesehen und ausgestaltet ist. Der Ventilator ist beispielsweise elektrisch angetrieben beziehungsweise antreibbar und hierzu antriebstechnisch mit einem Elektromotor gekoppelt.

Selbstredend kann das Stellventil auch in einem anderen Einsatzgebiet Verwendung finden. Das Stellventil ist insoweit zunächst ganz allgemein als einstellbares Ventil zu verstehen, mittels welchem die Durchströmungsquerschnittsfläche des Strömungskanals und mithin ein Fluiddurchsatz durch das Stellventil einstellbar sind. Unter dem Fluiddurchsatz ist eine Fluidmenge pro Zeiteinheit zu verstehen, vorzugsweise ein Fluidmassenstrom beziehungsweise ein Fluidvolumenstrom. Zusätzlich oder alternativ kann ein anderes Fluid als Luft verwendet werden, beispielsweise ein von Luft verschiedenes gasförmiges Fluid.

Das Stellventil weist als wesentliche Bestandteile den in dem Ventilgehäuse ausgebildeten Strömungskanal und zum Einstellen des Durchströmungsquerschnitts beziehungsweise der Durchströmungsquerschnittsfläche des Strömungskanals das Ventilelement auf. Das Ventilelement ist bezüglich des Ventilgehäuses verlagerbar, um so die Durchströmungsquerschnittsfläche des Strömungskanals einzustellen. Hierbei liegen in den unterschiedlichen Axialstellungen des Ventilelements bezüglich des Ventilgehäuses unterschiedliche Werte für die Durchströmungsquerschnittsfläche vor. In einer ersten Axialstellung entspricht eine Durchströmungsquerschnittsfläche des Strömungskanals also der ersten Durchströmungsquerschnittsfläche und in einer zweiten Axialstellung der zweiten Durchströmungsquerschnittsfläche. Anders ausgedrückt weist die Durchströmungsquerschnittsfläche in der ersten Axialstellung einen ersten Durchströmungsquerschnittsflächeninhalt und in der zweiten Axialstellung einen von dem ersten Durchströmungsquerschnittsflächeninhalt verschiedenen zweiten Durchströmungsquerschnittsflächeninhalt auf.

Um einen besonders einfachen Aufbau und ein zuverlässiges Einstellen der Durchströmungsquerschnittsfläche zu ermöglichen, ist das Ventilelement axial verlagerbar, nämlich bezüglich der Längsmittelachse des Strömungskanals. Anstelle der Längsmittelachse des Strömungskanals kann auch eine Längsmittelachse des Stellventils oder der Lüftungseinrichtung verwendet werden. Das Ventilelement ist in unterschiedlichen Axialstellungen, nämlich zumindest der ersten Axialstellung und der zweiten Axialstellung anordnenbar. Bevorzugt ist das Ventilelement an dem Ventilgehäuse gelagert, nämlich derart, dass die axiale Verlagerbarkeit gegeben ist. In anderen Worten ist das Ventilelement in axialer Richtung verlagerbar an dem Ventilgehäuse gelagert.

In den unterschiedlichen Axialstellungen wirkt das Ventilelement mit dem Ventilsitz zum Einstellen der unterschiedlichen Durchströmungsquerschnittsflächen zusammen. Bevorzugt liegt das Ventilelement in den unterschiedlichen Axialstellungen mit unterschiedlichen Abständen zu dem Ventilsitz vor. Die jeweilige Durchströmungsquerschnittsfläche des Strömungskanals stellt sich zwischen dem Ventilelement und dem Ventilsitz ein. In der ersten Axialstellung entspricht die Durchströmungsquerschnittsfläche des Strömungskanals der ersten Durchströmungsquerschnittsfläche und in der zweiten Axialstellung des Ventilelements der zweiten Durchströmungsquerschnittsfläche.

Beispielsweise ist die erste Durchströmungsquerschnittsfläche kleiner als die zweite Durchströmungsquerschnittsfläche. Besonders bevorzugt ist die erste Durchströmungsquerschnittsfläche gleich null, sodass in der ersten Axialstellung das Ventilelement mit dem Ventilsitz zum Verschließen des Strömungskanals zusammenwirkt. Hierzu liegt das Ventilelement vorzugsweise durchgehend und ununterbrochen an dem Ventilsitz an, insbesondere entlang einer gedachten und durchgehenden Linie beziehungsweise entlang eines gedachten Kreises. Die zweite Durchströmungsquerschnittsfläche entspricht bevorzugt einer bei bestimmungsgemäßem Betrieb des Stellventils maximal einstellbaren Durchströmungsquerschnittsfläche. Zumindest ist jedoch die zweite Durchströmungsquerschnittsfläche größer als die erste Durchströmungsquerschnittsfläche , sodass der Strömungskanal in der zweiten Axialstellung des Ventilelements zumindest teilweise strömungstechnisch freigegeben ist.

Das Verlagern des Ventilelements in axialer Richtung bezüglich der Längsmittelachse des Strömungskanals kann grundsätzlich auf beliebige Art und Weise realisiert sein. Im Rahmen der Erfindung ist es vorgesehen, dass das Verlagern des Ventilelements mittels des Stellantriebs erfolgt, welcher hierzu über den elektrischen Stellmotor verfügt. In anderen Worten ist das Ventilelement in axialer Richtung unter Verwendung des Stellantriebs antreibbar. Um eine zuverlässige antriebstechnische Anbindung des Stellantriebs an das Ventilelement zu erreichen, ist das Ventilelement mithilfe der Führungseinrichtung in Umfangsrichtung festgesetzt. Die Führungseinrichtung dient insoweit dazu, das Ventilelement bezüglich der Längsmittelachse des Strömungskanals in axialer Richtung verlagerbar zu lagern, es gleichzeitig jedoch in Umfangsrichtung festzusetzen.

Beispielsweise verfügt die Führungseinrichtung hierzu über eine an dem Ventilelement vorliegende erste Führungsvorrichtung und und eine bezüglich des Ventilgehäuses ortsfeste zweite Führungsvorrichtung, wobei die beiden Führungsvorrichtungen formschlüssig ineinander eingreifen, um die Lagerung des Ventilelements bezüglich des Ventilgehäuses umzusetzen. Die erste Führungsvorrichtung liegt hierbei beispielsweise in Form eines Führungsvorsprungs und die zweite Führungsvorrichtung als Führungsausnehmung vor, wobei der Führungsvorsprung formschlüssig in die Führungsausnehmung eingreift. Selbstverständlich ist auch eine Ausgestaltung möglich, bei welcher die erste Führungsvorrichtung als Führungsausnehmung und die zweite Führungsvorrichtung als in die Führungsausnehmung eingreifender Führungsvorsprung ausgestaltet ist.

Der Stellantrieb ist zum Verlagern des Ventilelements antriebstechnisch mit diesem gekoppelt. Der Stellantrieb kann grundsätzlich beliebig ausgestaltet sein, sofern er zum Antreiben des Ventilelements in axialer Richtung vorgesehen und ausgestaltet ist. Hierbei weist der Stellantrieb den elektrischen Stellmotor auf oder liegt als ein solcher vor. Der elektrische Stellmotor kann auch als Elektromotor oder als elektrischer Aktuator bezeichnet werden. Der Stellantrieb ist derart mit dem Ventilelement antriebstechnisch gekoppelt, dass eine Drehbewegung des elektrischen Stellmotors in die axiale Verlagerung des Ventilelements umgesetzt wird. Vorzugsweise liegt die Kopplung zwischen dem Stellmotor und dem Ventilelement insoweit über einen Zahnstangenantrieb vor.

Um eine Entkopplung des Stellantriebs von dem in dem Strömungskanal vorliegenden Fluid zu erreichen und insoweit einen besonders guten Schutz des Stellantriebs vor dem Fluid zu gewährleisten, ist der Stellantrieb kontaktlos über die Magnetverbindungsvorrichtung antriebstechnisch an das Ventilelement angeschlossen. Die antriebstechnische Verbindung zwischen dem Stellantrieb und dem Ventilelement ist ausschließlich kontaktlos hergestellt, nämlich ausschließlich über die Magnetverbindungsvorrichtung. Das bedeutet, dass die antriebstechnische Anbindung des Ventilelements an den Stellantrieb zumindest bereichsweise ausschließlich magnetisch und allenfalls teilweise mechanisch vorliegt.

Die Magnetverbindungsvorrichtung verfügt über mehrere Magnetverbindungseinrichtungen, nämlich zumindest die erste Magnetverbindungseinrichtung und die zweite Magnetverbindungseinrichtung. Die beiden Magnetverbindungseinrichtungen wirken antriebstechnisch zusammen, um den Stellantrieb antriebstechnisch mit dem Ventilelement zu koppeln. Die erste Magnetverbindungseinrichtung ist hierbei dem Stellantrieb und die zweite Magnetverbindungseinrichtung dem Ventilelement zugeordnet. Das bedeutet, dass die erste Verbindungseinrichtung bevorzugt starr und permanent antriebstechnisch mit dem Stellantrieb verbunden ist, wohingegen die zweite Magnetverbindungseinrichtung bevorzugt starr und permanent antriebstechnisch mit dem Ventilelement gekoppelt ist. Beispielsweise ist die zweite Magnetverbindungseinrichtung an dem Ventilelement befestigt oder bildet einen Bestandteil von diesem.

Letztlich liegt insoweit eine lediglich mittelbare antriebstechnische Verbindung zwischen dem Stellantrieb und dem Ventilelement vor, nämlich über die Magnetverbindungsvorrichtung. Hierbei ist die erste Magnetverbindungeinrichtung lediglich mittelbar über die zweite Magnetverbindungseinrichtung mit dem Ventilelement antriebstechnisch verbunden und umgekehrt die zweite Magnetverbindungseinrichtung lediglich mittelbar über die erste Magnetverbindungseinrichtung mit dem Stellantrieb. Eine solche Ausgestaltung des Stellventils ermöglicht eine besonders effektive Kapselung des Stellantriebs, um diesen vor Einflüssen aus der Außenumgebung beziehungsweise vor Einflüssen durch das Fluid zu schützen. Entsprechend ist eine besonders dauerhafte und langlebige Ausgestaltung des Stellventils realisiert.

Zu seinem Schutz vor Einflüssen durch das Fluid ist der Stellantrieb in der Stellantriebsaufnahme des Antriebsgehäuses angeordnet, welches bevorzugt fluiddicht oder zumindest fluidfest ist. Das Antriebsgehäuse ist zur Aufnahme des Stellantriebs vorgesehen und ausgestaltet. Entsprechend verfügt das Antriebsgehäuse über die Stellantriebsaufnahme, in welcher der Stellantrieb angeordnet oder zumindest anordnenbar ist. Das Antriebsgehäuse befindet sich in dem Strömungskanal, sodass das Antriebsgehäuse von dem in dem Strömungskanal befindlichen Fluid beaufschlagt ist. Beispielsweise steht das Fluid zumindest bereichsweise in Kontakt mit der Antriebsgehäusewand des Antriebsgehäuses, welches die Stellantriebsaufnahme begrenzt. Insbesondere grenzt die Antriebsgehäusewand die Stellantriebsaufnahme von dem Strömungskanal ab.

Besonders bevorzugt sind die Antriebsgehäusewand und das Antriebsgehäuse fluiddicht oder zumindest fluidfest ausgestaltet, sodass das Fluid aus dem Strömungskanal nicht in die Stellantriebsaufnahme einströmen kann und umgekehrt in der Stellantriebsaufnahme vorliegendes Fluid nicht in den Strömungskanal gelangt. In anderen Worten trennt das Antriebsgehäuse, insbesondere die Antriebsgehäusewand, den Strömungskanal und die Stellantriebsaufnahme strömungstechnisch voneinander. Entsprechend ist der Stellantrieb vor einem Einfluss des Fluids geschützt angeordnet. Das fluiddichte Antriebsgehäuse ist unter den jeweiligen Umgebungsbedingungen bevorzugt vollständig gegenüber dem Fluid abgedichtet, zumindest soweit dies konstruktiv möglich ist. Das fluidfeste Antriebsgehäuse ist für einen dauerhaften Einsatz unter den jeweiligen Umgebungsbedingungen ausgelegt, ohne jedoch vollständige Dichtheit zu gewährleisten.

Das Stellventil, insbesondere das Antriebsgehäuse, ist bevorzugt derart ausgestaltet, dass der Stellantrieb zuverlässig vor in dem Ventilator aus dem Fluid ausfallender Flüssigkeit geschützt ist. Die ausfallende Flüssigkeit ist beispielsweise Kondensat, insbesondere kondensierendes Wasser. Zusätzlich kann das Antriebsgehäuse zum Schutz des Stellantriebs gegen die zusätzlich zu dem Fluid in den Ventilator eintretende Flüssigkeit ausgestaltet sein. Beispielsweise ist das Stellventil beziehungsweise das Antriebsgehäuse derart ausgestaltet, dass das Stellventil insgesamt mindestens die Schutzart IPX2, mindestens die Schutzart IPX3 oder mindestens die Schutzart IPX4 erreicht. Bevorzugt wird mindestens die Schutzart IPX5 erreicht. Von Bedeutung ist, dass der Stellantrieb während eines bestimmungsgemäßen Betriebs des Stellventils nicht oder allenfalls nur in geringem und unvermeidbarem Ausmaß in Kontakt mit dem Fluid und/oder der Flüssigkeit gelangt.

Eine solche Ausgestaltung des Stellventils wird insbesondere durch die Magnetverbindungseinrichtung ermöglicht, über welche der Stellantrieb und das Ventilelement kontaktlos antriebstechnisch miteinander verbunden sind. Dies wird mittels der Magnetverbindung erzielt, welche zwischen der ersten Magnetverbindungseinrichtung und der zweiten Magnetverbindungseinrichtung vorliegt. Unter der Magnetverbindung ist eine magnetische Verbindung zu verstehen, über welche zwischen den Magnetverbindungseinrichtungen eine Kraft und/oder ein Drehmoment übertragbar ist. Weiter ist unter der Magnetverbindung eine Verbindung zu verstehen, welche eine zuverlässige und reproduzierbare Verlagerung des Ventilelements mittels des Stellantriebs sicherstellt.

Die Magnetverbindungseinrichtungen sind auf gegenüberliegenden Seiten der Wand angeordnet, nämlich derart, dass zwischen ihnen die Magnetverbindung vorliegt, über welche der Stellantrieb antriebstechnisch mit dem Ventilelement gekoppelt ist. Das bedeutet, dass die Magnetverbindung durch die Wand hindurch verläuft. Besonders bevorzugt sind die Magnetverbindungseinrichtungen auf gegenüberliegenden Seiten der Wand einander gegenüberliegend beziehungsweise mit Überdeckung angeordnet. Eine auf der Wand senkrecht stehende Gerade, welche auch als Flächennormale bezeichnet werden kann, verläuft vorzugsweise einerseits der Wand durch die erste Magnetverbindungseinrichtung und andererseits der Wand durch die zweite Magnetverbindungseinrichtung, sodass entsprechend die Magnetverbindungseinrichtungen auf unterschiedlichen Seiten der Wand einander gegenüberliegend angeordnet sind. Hierdurch wird eine besonders effektive Kraftübertragung beziehungsweise Drehmomentübertragung zwischen den Magnetverbindungseinrichtungen erzielt.

Die Wand ist vorzugsweise die Antriebsgehäusewand des Antriebsgehäuses und/oder eine Aufnahmeelementwand eines Aufnahmeelements. Die Aufnahmeelementwand kann jedoch auch als Teil der Antriebsgehäusewand angesehen werden. Vorzugsweise begrenzen die Antriebsgehäusewand und die Aufnahmeelementwand die Stellantriebaufnahme gemeinsam, also jeweils teilweise. Das Aufnahmeelement ist zur Aufnahme des Antriebsgehäuses vorgesehen und ausgestaltet und insoweit zur Halterung des Antriebsgehäuses bezüglich des Ventilgehäuses. Beispielsweise ist das Aufnahmeelement mit dem Ventilgehäuse verbunden oder einstückig und/oder materialeinheitlich mit diesem ausgestaltet. Das Aufnahmeelement kann insoweit gemeinsam mit dem Ventilgehäuse als ein Spritzgießteil hergestellt werden. Vorzugsweise ist das Antriebsgehäuse ausschließlich über das Aufnahmeelement an dem Ventilgehäuse befestigt. Beispielsweise weist das Aufnahmeelement eine Aufnahme für das Antriebsgehäuse auf, in welche das Ventilgehäuse eingesetzt ist oder wird. Insbesondere ist das Antriebsgehäuse kraftschlüssig, formschlüssig und/oder stoffschlüssig an dem Ventilgehäuse befestigt. Auf das Aufnahmeelement wird nachfolgend noch weiter eingegangen werden.

Die beschriebene Ausgestaltung des Stellventils hat den Vorteil, dass die Durchströmungsquerschnittsfläche zuverlässig und mit hoher Genauigkeit einstellbar ist. Zudem ist der zum Antreiben des Ventilelements vorliegende Stellantrieb gekapselt ausgestaltet, sodass er strömungstechnisch von dem Strömungskanal getrennt angeordnet ist. Hierdurch ist ein guter Schutz des Stellantriebs vor äußeren Einflüssen, insbesondere vor dem Fluid und/oder vor in dem Fluid enthaltener Flüssigkeit, gewährleistet, sodass eine lange Lebensdauer des Stellventils erzielt wird.

Eine Weiterbildung der Erfindung sieht vor, dass das Antriebsgehäuse über wenigstens einen Haltesteg derart in dem Strömungskanal angeordnet ist, dass der Strömungskanal das Antriebsgehäuse in Umfangsrichtung vollständig und insbesondere durchgehend umgreift. Der Strömungskanal ist von einer Ventilgehäusewand des Ventilgehäuses begrenzt. Bevorzugt umgreift die Ventilgehäusewand den Strömungskanal in Umfangsrichtung bezüglich seiner Längsmittelachse durchgehend und vollständig. In axialer Richtung bezüglich der Längsmittelachse gesehen ist das Antriebsgehäuse zumindest bereichsweise in Überdeckung mit der Ventilgehäusewand angeordnet. Das Antriebsgehäuse ist derart in dem Strömungskanal angeordnet, dass es in Umfangsrichtung durchgehend von der Kanalwand beabstandet angeordnet ist, sodass der Strömungskanal das Antriebsgehäuse in Umfangsrichtung vollständig umgreift. Beispielsweise ist das Antriebsgehäuse mittig beziehungsweise zentral in dem Strömungskanal angeordnet, sodass ein Abstand des Antriebsgehäuses von der Ventilgehäusewand in Umfangsrichtung durchgehend konstant ist.

Eine derartige Anordnung des Antriebsgehäuses wird mittels des wenigstens einen Haltestegs erzielt. Der Haltestegs greift einerseits an dem Antriebsgehäuse und andererseits an dem Ventilgehäuse beziehungsweise der Ventilgehäusewand an. Selbstredend kann lediglich ein einziger Haltesteg vorliegen. Besonders bevorzugt ist das Antriebsgehäuse jedoch mittels mehrerer Haltestege befestigt, welche jeweils auf ihrer dem Antriebsgehäuse abgewandten Seite an dem Ventilgehäuse beziehungsweise der Ventilgehäusewand angreifen, um das Antriebsgehäuse in dem Strömungskanal zu halten. Die mehreren Haltestege sind in Umfangsrichtung besonders bevorzugt äquidistant angeordnet, also in Umfangsrichtung gleichmäßig verteilt. Beispielsweise liegen wenigstens zwei Haltestege, wenigstens drei Haltestege oder wenigstens vier Haltestege vor. Dies ermöglicht eine zuverlässige und stabile Befestigung des Antriebsgehäuses in dem Ventilgehäuse.

Eine Weiterbildung der Erfindung sieht vor, dass der wenigstens eine Haltesteg ein Aufnahmeelement trägt, in dem das Antriebsgehäuse angeordnet ist, wobei das Antriebsgehäuse mit einem an dem Aufnahmeelement befestigten Deckel verschlossen ist. Bevorzugt ist das Aufnahmeelement einstückig und materialeinheitlich mit dem wenigstens einen Haltesteg und dem Ventilgehäuse ausgebildet, wohingegen das Antriebsgehäuse als in das Aufnahmeelement während einer Montage des Stellventils einsetzbares Einsetzteil vorliegt. Das Aufnahmeelement, der mindestens eine Haltesteg und das Ventilgehäuse liegen hierbei beispielsweise als Spritzgießteil oder dergleichen vor und werden gemeinsam hergestellt. Das Antriebsgehäuse wird hingegen separat von dem Ventilgehäuse hergestellt und erst nachfolgend während der Montage des Stellventils in das Aufnahmeelement eingesetzt. Das Aufnahmeelement liegt bevorzugt in der Gestalt eines Hohlzylinders vor, welcher über den wenigstens einen Haltestegs an dem Ventilgehäuse befestigt ist.

Zusätzlich zu dem Aufnahmeelement liegt der Deckel vor, welche an dem Aufnahmeelement befestigt ist und dem Verschließen des Antriebsgehäuses dient. Bei der Montage des Stellventils ist es insoweit vorgesehen, zunächst das Antriebsgehäuse in das Aufnahmeelement einzusetzen und anschließend den Deckel an dem Aufnahmeelement anzuordnen und an ihm zu befestigen. Hierzu wird das Antriebsgehäuse verschlossen, nämlich mittels des Deckels. Besonders bevorzugt verschließt der Deckel das Antriebsgehäuse fluiddicht, sodass also der Deckel ein Eindringen von Fluid aus dem Strömungskanal in das Antriebsgehäuse unterbindet. Der Deckel ist zumindest an dem Aufnahmeelement befestigt. Beispielsweise stützt sich hierbei der Deckel nach seiner Montage an dem Aufnahmeelement ab. Zusätzlich kann der Deckel an dem Antriebsgehäuse befestigt sein. Es kann auch vorgesehen sein, dass der Deckel lediglich mittelbar an dem Aufnahmeelement befestigt ist, nämlich über das Antriebsgehäuse. Hierzu ist zunächst das Antriebsgehäuse an dem Aufnahmeelement und schließlich der Deckel an dem Antriebsgehäuse befestigt, nämlich jeweils unmittelbar.

Besonders bevorzugt ist es vorgesehen, dass der Deckel mit dem Aufnahmeelement, dem Antriebsgehäuse oder sowohl dem Aufnahmeelement als auch dem Antriebsgehäuse formschlüssig verbunden ist, beispielsweise jeweils mittels einer Rastverbindung. Insoweit kann eine formschlüssige Verbindung beziehungsweise eine Rastverbindung zwischen dem Deckel und dem Aufnahmeelement oder zwischen dem Deckel und dem Antriebsgehäuse vorliegen. Es kann jedoch auch vorgesehen sein, dass der Deckel über eine erste formschlüssige Verbindung beziehungsweise Rastverbindung an dem Aufnahmeelement und über eine zweite formschlüssige Verbindung beziehungsweise Rastverbindung an dem Antriebsgehäuse befestigt ist, bevorzugt jeweils unmittelbar. Hierdurch wird eine zuverlässige Befestigung des Deckels und des Antriebsgehäuses an dem Aufnahmeelement erzielt. Der Deckel weist bevorzugt eine Deckelwand auf, die als Teil der Antriebsgehäusewand angesehen werden kann.

Eine Weiterbildung der Erfindung sieht vor, dass der wenigstens eine Haltesteg und der Deckel gemeinsam einen Kabelkanal begrenzen, der einerseits in das Antriebsgehäuse und andererseits in eine abseits des Strömungskanals in dem Ventilgehäuse ausgebildete Kabelaufnahme einmündet. Der Kabelkanal liegt insoweit zwischen dem Haltesteg und dem Deckel vor und wird von diesen im Schnitt gesehen gemeinsam vollständig umgriffen. Der Kabelkanal ist insoweit von dem Haltesteg und dem Deckel vor einem Einfluss des Fluids aus dem Strömungskanal geschützt.

Der Kabelkanal verbindet das Antriebsgehäuse mit der Kabelaufnahme, welche in dem Ventilgehäuse ausgebildet ist. Vorzugsweise ist in dem Kabelkanal mindestens eine elektrische Leitung angeordnet, über welche der Stellantrieb elektrisch mit einem Stromanschluss des Stellventils verbunden ist. Der Stromanschluss liegt beispielsweise als Steckverbindung oder als Klemmverbindung an dem Ventilgehäuse vor und ermöglicht eine elektrische Anbindung des Stellventils beziehungsweise des Stellantriebs an eine abseits des Stellventils vorliegende Stromquelle. Diese Ausgestaltung des Stellventils stellt eine zuverlässige elektrische Anbindung des Stellantriebs sicher.

Eine Weiterbildung der Erfindung sieht vor, dass der Haltesteg eine Ventilelementaufnahme aufweist, in die das Ventilelement in wenigstens einer Axialstellung eingreift. Die Ventilelementaufnahme liegt in Gestalt einer Vertiefung in dem Haltestegs vor und ist in Richtung des Ventilelements offen. Die Ventilelementaufnahme durchgreift den Haltestegs lediglich teilweise, insbesondere in axialer Richtung. Die Ventilelementaufnahme ist insoweit in axialer Richtung in die von dem Ventilelement abgewandte Richtung von einem Boden begrenzt, welcher auch als Endanschlag für das Ventilelement dient. In wenigstens einer Axialstellung des Ventilelements greift das Ventilelement in die Ventilelementaufnahme ein, insbesondere liegt es in dieser Axialstellung an dem die Ventilelementaufnahme begrenzenden Boden an. Vorzugsweise ist dies in der zweiten Axialstellung der Fall.

Vorzugsweise ist die Ventilelementaufnahme in radialer Richtung nach außen zumindest einerseits von einer Einlaufschräge begrenzt. Diese ist derart ausgerichtet, dass ein Hineinbewegen des Ventilelements in die Ventilelementaufnahme auch bei in radialer Richtung ausgelenktem Ventilelement ohne weiteres möglich ist. Die Einlaufschräge bewirkt insoweit bei dem Hineinbewegen des Ventilelements in die Ventilelementaufnahme eine Zentrierung des Ventilelements, insbesondere bevor das Ventilelement in Anlagekontakt mit dem Boden beziehungsweise dem Endanschlag gerät.

Liegen mehrere Haltestege vor, so ist bevorzugt in jedem dieser Haltestege eine solche Ventilelementaufnahme jeweils ausgestaltet. Die beschriebene Ausführungsform des Stellventils bewirkt ein zuverlässiges Festsetzen des Ventilelements in radialer Richtung, insbesondere bei vollständig geöffnetem Stellventil. Entsprechend wird eine durch das durch den Strömungskanal strömende Fluid induzierte Schwingung des Ventilelements in radialer Richtung zuverlässig unterbunden und folglich hieraus resultierende Geräusche vermieden.

Eine Weiterbildung der Erfindung sieht vor, dass der Deckel von einer Abdeckung des Stellventils übergriffen ist, der mit dem Haltesteg und/oder Ventilgehäuse bündig abschließt oder über sie übersteht. Der Deckel ist an dem Ventilgehäuse angeordnet, insbesondere an ihm befestigt. Vorzugsweise begrenzt der Deckel gemeinsam mit dem Ventilgehäuse einen weiteren Strömungskanal, der sich an den Strömungskanal anschließt. Während der Strömungskanal in axialer Richtung bezüglich seiner Längsmittelachse verläuft beziehungsweise in dieser Richtung seine größten Abmessungen aufweist, erstreckt sich der weitere Strömungskanal in radialer Richtung nach außen beziehungsweise weist in dieser Richtung seine größten Abmessungen auf. Beispielsweise geht der weitere Strömungskanal in radialer Richtung innen von dem Strömungskanal aus und mündet in radialer Richtung außen in eine Außenumgebung des Stellventils ein.

Der weitere Strömungskanal ist bevorzugt in Umfangsrichtung durchgehend oder zumindest nahezu durchgehend ausgestaltet. Insbesondere liegt der weitere Strömungskanal in Umfangsrichtung gesehen zwischen den Haltestegen vor, ist also lediglich von diesen unterbrochen. Die Abdeckung bewirkt eine Umlenkung des Fluids aus axialer Richtung in radialer Richtung oder umgekehrt, je nach Strömungsrichtung des Fluids. Die Abdeckung übergreift den Haltesteg und/oder das Ventilgehäuse bevorzugt vollständig, insbesondere schließt er bündig mit Ihnen ab oder steht sogar über sie über. Hierdurch wird ein guter optischer Eindruck des Stellventils erzielt, insbesondere falls es als Bestandteil der Lüftungseinrichtung eingesetzt wird, nämlich durch ein optisches Verdecken des Haltestegs und/oder des Ventilgehäuses.

Eine Weiterbildung der Erfindung sieht vor, dass der Stellmotor eine um eine Motordrehachse drehbare Motorwelle aufweist, wobei die Motordrehachse bezüglich einer zu der Längsmittelachse des Strömungskanals parallelen Ebene angewinkelt ist. Die Motorwelle ist Bestandteil des Stellmotors, insbesondere ist sie unmittelbar mit einem Rotor des Stellmotors gekoppelt. Die Motorwelle ragt aus einem Motorgehäuse des Stellmotors heraus, um die antriebstechnische Anbindung des Stellmotors an das Ventilelement zu ermöglichen. Die Motorwelle rotiert während eines Betriebs des Stellmotors um die Motordrehachse.

Der Stellmotor ist derart angeordnet beziehungsweise ausgerichtet, dass die Motordrehachse bezüglich der gedachten Ebene angewinkelt ist, die parallel zu der Längsmittelachse des Strömungskanals verläuft. Hierbei kann es vorgesehen sein, dass die Ebene die Längsmittelachse in sich aufnimmt. Es kann jedoch auch vorgesehen sein, dass die Ebene beabstandet parallel zu der Längsmittelachse vorliegt. Die Motordrehachse ist bezüglich der Ebene angewinkelt. Das bedeutet, dass sie die Ebene unter einem Winkel schneidet, welcher größer als 0° und kleiner als 180° ist. Besonders bevorzugt beträgt der Winkel mindestens 60° und höchstens 120°, mindestens 75° und höchstens 105° oder in etwa oder genau 90°. Bevorzugt steht die Motordrehachse also senkrecht auf der zu der Längsmittelachse parallelen Ebene. Hierdurch wird ein kompakter Aufbau des Stellventils erzielt, da auf ein Umlenkgetriebe oder dergleichen verzichtet werden kann. Zudem ist eine kostengünstige Herstellung des Stellventils möglich.

Eine Weiterbildung der Erfindung sieht vor, dass die Motorwelle des Stellmotors mit einem Zahnrad gekoppelt ist, das mit einer Zahnstange der ersten Magnetverbindungseinrichtung in Eingriff steht. Das bedeutet, dass die erste Magnetverbindungseinrichtung über die Zahnstange und das Zahnrad antriebstechnisch an die Motorwelle angebunden ist. Das Zahnrad sitzt bevorzugt unmittelbar auf der Motorwelle auf und ist unmittelbar an der Motorwelle befestigt. Das Zahnrad steht mit der Zahnstange in Eingriff beziehungsweise kämmt mit dieser. Hierdurch wird die rotatorische Bewegung der Motorwelle in eine lineare Bewegung der Zahnstange und mithin der ersten Magnetverbindungseinrichtung umgesetzt. Die Zahnstange bildet einen Bestandteil der ersten Magnetverbindungseinrichtung. Die beschriebene Ausgestaltung ermöglicht erneut eine äußerst kostengünstige Umsetzung des Stellventils.

Eine Weiterbildung der Erfindung sieht vor, dass die erste Magnetverbindungseinrichtung in einer Führungsausnehmung linear verlagerbar gelagert ist. Die Führungsausnehmung wird beispielsweise von Führungsschienen begrenzt, zwischen welchen die erste Magnetverbindungseinrichtung vorliegt. Insbesondere hintergreift die Magnetverbindungseinrichtung die Führungsschienen, sodass sie ausschließlich in axialer Richtung verlagerbar ist. Die Führungsausnehmung beziehungsweise die Führungsschienen sind vorzugsweise in dem Antriebsgehäuse angeordnet, vorzugsweise sind sie an der Antriebsgehäusewand und/oder der Aufnahmeelementwand ausgestaltet. Beispielsweise wird die Führungsausnehmung beziehungsweise werden die Führungsschienen bei der Herstellung des Antriebsgehäuses und/oder des Aufnahmeelements mit ausgebildet, vorzugsweise während einer Herstellung des Antriebsgehäuses beziehungsweise des Aufnahmeelements durch Spritzgießen. Erneut dient dies der Realisierung einer besonders kostengünstigen Ausgestaltung des Stellventils.

Eine Weiterbildung der Erfindung sieht vor, dass die erste Magnetverbindungseinrichtung eine Aufnahmetasche aufweist, in der mindestens ein Magnetverbindungselement angeordnet ist. Die Aufnahmetasche ist zur vollständigen Aufnahme des Magnetverbindungselements vorgesehen und ausgestaltet. Das Magnetverbindungselement liegt insoweit vollständig in der Aufnahmetasche vor und ragt nicht aus dieser heraus. Die Aufnahmetasche ist beispielsweise in Überdeckung mit der Zahnstange angeordnet, insbesondere liegt die Aufnahmetasche zwischen der Zahnstange und der Antriebsgehäusewand vor. Die Aufnahmetasche ist sowohl in Richtung der Zahnstange als auch in Richtung der Antriebsgehäusewand von der ersten Magnetverbindungseinrichtung begrenzt, sodass das Magnetverbindungselement stets beabstandet von der Antriebsgehäusewand vorliegt. Die beschriebene Ausgestaltung der ersten Magnetverbindungseinrichtung ist besonders einfach und kostengünstig herzustellen.

Eine Weiterbildung der Erfindung sieht vor, dass das Ventilelement einen an dem Antriebsgehäuse und/oder dem Aufnahmeelement anliegenden zylindrischen Führungsbereich und einen von dem Führungsbereich fortgeneigten Ventilbereich aufweist, der mit dem Ventilsitz zum Einstellen der unterschiedlichen Durchströmungsquerschnittsflächen des Strömungskanals zusammenwirkt. Das Ventilelement setzt sich insoweit aus dem Führungsbereich und dem Ventilbereich zusammen. Der Führungsbereich dient einer Führung des Ventilelements, indem er an dem Antriebsgehäuse und/oder an dem Aufnahmeelement außenseitig anliegt. Der Führungsbereich ist grundsätzlich zylindrisch ausgestaltet, insbesondere kreiszylindrisch, um eine gleichmäßige und reibungsarme Führung des Ventilelements zu gewährleisten.

Der Ventilbereich geht von dem Führungsbereich aus und ist von diesem fortgeneigt. Vorzugsweise geht der Ventilbereich von einer Mantelfläche des Führungsbereichs aus, beispielsweise in axialer Richtung gesehen in etwa mittig. Hierdurch wird ein Verkippen des Ventilelements bezüglich des Antriebsgehäuses beziehungsweise des Aufnahmeelement zuverlässig unterbunden. Bevorzugt weist das Aufnahmeelement einen Ringkragen auf, der in wenigstens einer Axialstellung des Ventilelements zwischen den Führungsbereich und den Ventilbereich eingreift. Eine solche Ausgestaltung des Stellventils stellt eine zuverlässige Führung des Ventilelements bezüglich des Ventilgehäuses sicher.

Eine Weiterbildung der Erfindung sieht vor, dass die erste Magnetverbindungseinrichtung und die zweite Magnetverbindungseinrichtung jeweils mehrere magnetisch miteinander zusammenwirkende Magnetverbindungselemente aufweist. Es kann hierbei vorgesehen sein, dass die Magnetverbindungselemente einer der Magnetverbindungseinrichtungen als Permanentmagnete ausgestaltet sind, wohingegen die Magnetverbindungselemente der anderen Magnetverbindungseinrichtung aus einem magnetisierbaren Material bestehen oder umgekehrt. Besonders bevorzugt sind jedoch die Magnetverbindungselemente beider Magnetverbindungseinrichtungen als Permanentmagnete ausgestaltet, um eine zuverlässige Magnetverbindung zwischen den Magnetverbindungseinrichtungen zu erzielen.

Die Erfindung betrifft weiterhin ein Verfahren zum Betreiben eines Stellventils, insbesondere eines Stellventils gemäß den Ausführungen im Rahmen dieser Beschreibung, wobei das Stellventil über einen in einem Ventilgehäuse des Stellventils ausgebildeten Strömungskanal verfügt, in dem ein Ventilelement zum Einstellen einer Durchströmungsquerschnittsfläche des Strömungskanals angeordnet ist. Dabei ist vorgesehen, dass das Ventilelement bezüglich einer Längsmittelachse des Strömungskanals zumindest zeitweise axial verlagert wird und mit einem Ventilsitz in einer ersten Axialstellung zum Einstellen einer ersten Durchströmungsquerschnittsfläche des Strömungskanals und in einer zweiten Axialstellung zum Einstellen einer von der ersten Durchströmungsquerschnittsfläche verschiedenen zweiten Durchströmungsquerschnittsfläche des Strömungskanals zusammenwirkt, wobei das Ventilelement bezüglich der Längsmittelachse des Strömungskanals in Umfangsrichtung mittels einer Führungseinrichtung festgesetzt und in axialer Richtung zumindest zeitweise mittels eines einen elektrischen Stellmotor aufweisenden Stellantriebs angetrieben wird, wobei der Stellantrieb kontaktlos über eine Magnetverbindungsvorrichtung antriebstechnisch an das Ventilelement angeschlossen ist, wobei die Magnetverbindungsvorrichtung eine an den Stellantrieb antriebstechnisch angebundene erste Magnetverbindungseinrichtung und eine magnetisch mit der ersten Magnetverbindungseinrichtung zusammenwirkende und an das Ventilelement antriebstechnisch angebundene zweite Magnetverbindungseinrichtung aufweist, sodass die erste Magnetverbindungseinrichtung lediglich mittelbar über die zweite Magnetverbindungseinrichtung mit dem Ventilelement antriebstechnisch verbunden ist, und wobei der Stellantrieb in einer Stellantriebsaufnahme eines in dem Strömungskanal vorliegenden Antriebsgehäuses angeordnet ist, wobei die erste Magnetverbindungseinrichtung einerseits einer Wand und die zweite Magnetverbindungseinrichtung andererseits der Wand angeordnet ist, sodass zwischen den Magnetverbindungseinrichtungen eine durch die Wand verlaufende Magnetverbindung vorliegt.

Auf die Vorteile einer derartigen Vorgehensweise beziehungsweise einer derartigen Ausgestaltung des Stellventils wurde bereits hingewiesen. Sowohl das Stellventil als auch das Verfahren zu seinem Betreiben können gemäß den Ausführungen im Rahmen dieser Beschreibung weitergebildet sein, sodass insoweit auf diese verwiesen wird.

Die Erfindung betrifft auch eine Lüftungseinrichtung mit einem Stellventil, insbesondere einem Stellventil gemäß den Ausführungen im Rahmen dieser Beschreibung, wobei das Stellventil über einen in einem Ventilgehäuse des Stellventils ausgebildeten Strömungskanal verfügt, in dem ein Ventilelement zum Einstellen einer Durchströmungsquerschnittsfläche des Strömungskanals angeordnet ist. Dabei ist vorgesehen, dass das Ventilelement bezüglich einer Längsmittelachse des Strömungskanals axial verlagerbar ist und mit einem Ventilsitz in einer ersten Axialstellung zum Einstellen einer ersten Durchströmungsquerschnittsfläche des Strömungskanals und in einer zweiten Axialstellung zum Einstellen einer von der ersten Durchströmungsquerschnittsfläche verschiedenen zweiten Durchströmungsquerschnittsfläche des Strömungskanals zusammenwirkt, wobei das Ventilelement bezüglich einer Längsmittelachse des Strömungskanals in Umfangsrichtung mittels einer Führungseinrichtung festgesetzt und in axialer Richtung mittels eines einen elektrischen Stellmotor aufweisenden Stellantriebs antreibbar ist, wobei der Stellantrieb kontaktlos über eine Magnetverbindungsvorrichtung antriebstechnisch an das Ventilelement angeschlossen ist, wobei die Magnetverbindungsvorrichtung eine an den Stellantrieb antriebstechnisch angebundene erste Magnetverbindungseinrichtung und eine magnetisch mit der ersten Magnetverbindungseinrichtung zusammenwirkende und an das Ventilelement antriebstechnisch angebundene zweite Magnetverbindungseinrichtung aufweist, sodass die erste Magnetverbindungseinrichtung lediglich mittelbar über die zweite Magnetverbindungseinrichtung mit dem Ventilelement antriebstechnisch verbunden ist, und wobei der Stellantrieb in einer Stellantriebsaufnahme eines in dem Strömungskanal vorliegenden Antriebsgehäuses angeordnet ist, wobei die erste Magnetverbindungseinrichtung einerseits einer Wand und die zweite Magnetverbindungseinrichtung andererseits der Wand angeordnet ist, sodass zwischen den Magnetverbindungseinrichtungen eine durch die Wand verlaufende Magnetverbindung vorliegt.

Erneut wird hinsichtlich der Vorteile und möglicher Weiterbildungen der Lüftungseinrichtung unterstellt Ventile auf die Ausführungen im Rahmen dieser Beschreibung verwiesen.

Eine Weiterbildung der Erfindung sieht einen Ventilator vor, der zur Förderung eines Fluidstroms durch den Strömungskanal vorgesehen und ausgestaltet ist. Die Lüftungseinrichtung verfügt also zusätzlich zu dem Stellventil über den Ventilator. Der Ventilator ist besonders bevorzugt elektrisch angetrieben, nämlich mittels eines elektrischen Ventilatorantriebs. Der Ventilatorantrieb ist besonders bevorzugt in dem Antriebsgehäuse angeordnet, insbesondere zusammen mit dem Stellantrieb, der dem Verstellen der Durchströmungsquerschnittsfläche des Strömungskanals dient. Bevorzugt ist der Ventilator hierbei auf der dem Ventilelement in axialer Richtung gegenüberliegenden Seite des Antriebsgehäuses angeordnet.

Der Ventilator verfügt bevorzugt über ein Laufrad und ein Leitrad. Das Laufrad ist in axialer Richtung bezüglich der Längsmittelachse des Strömungskanals zwischen dem Leitrad und dem Antriebsgehäuse angeordnet. Vorzugweise verfügt das Laufrad über mehrere Laufradschaufeln, welche in radialer Richtung außen an einem topfförmigen Grundkörper des Laufrads angeordnet sind. Der Grundkörper wird bei der Montage der Lüftungseinrichtung derart angeordnet, dass er das Antriebsgehäuse und/oder das Aufnahmeelement in radialer Richtung außenseitig zumindest bereichsweise, insbesondere in Umfangsrichtung durchgehend und ununterbrochen, umgreift. Beispielsweise liegt der Grundkörper hierbei an dem Getriebegehäuse und/oder dem Aufnahmeelement an, sodass das Laufrad drehbar gelagert ist beziehungsweise ein Gleitlager für das Laufrad gebildet ist.

Vorzugsweise ist an dem Grundkörper ein Zahnrad ausgebildet, das mit einem Zahnrad des Ventilatorantriebs in Eingriff steht. Das Laufrad beziehungsweise der Grundkörper des Laufrads kann selbstverständlich auch unmittelbar mit dem Ventilatorantrieb antriebstechnisch gekoppelt sein und hierzu insbesondere unmittelbar an einer Welle des Ventilatorantriebs angreifen.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung, wie in den Ansprüche definiert wird, zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Explosionsdarstellung einer Lüftungseinrichtung mit einem Stellventil und einem Ventilator,
- Figur 2: eine schematische Schnittdarstellung der Lüftungseinrichtung, sowie
- Figur 3: eine weitere Schnittdarstellung der Lüftungseinrichtung.

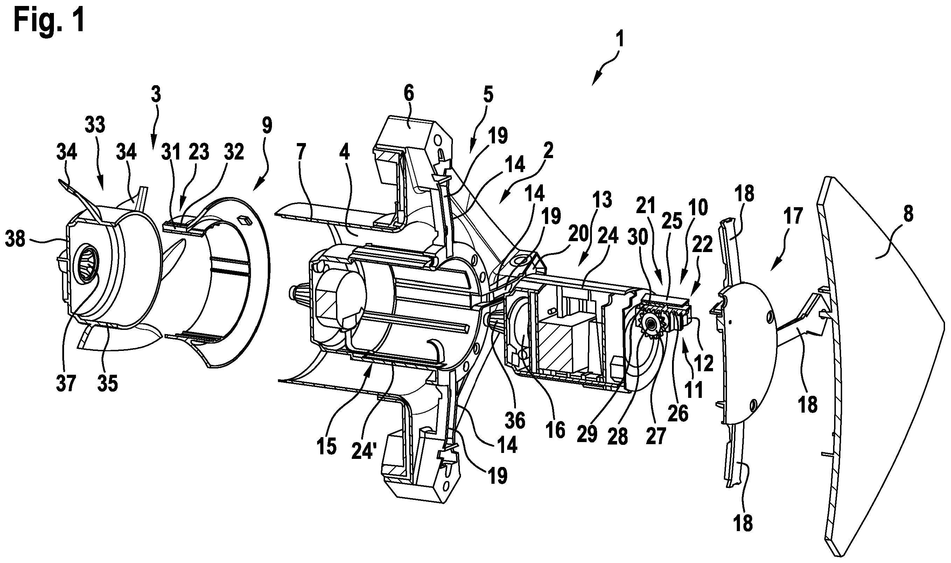

Die Figur 1 zeigt eine schematische und geschnittene Explosionsdarstellung einer Lüftungseinrichtung 1, die vorzugsweise zum Lüften eines Innenraums eines Gebäudes vorgesehen und ausgestaltet ist. Die Lüftungseinrichtung 1 verfügt über ein Stellventil 2 sowie über einen Ventilator 3. Der Ventilator 3 ist zur Förderung eines Fluids, insbesondere Luft, durch einen Strömungskanal 4 vorgesehen und ausgestaltet, entweder in Richtung des Innenraums oder aus Richtung des Innenraums. Der Strömungskanal 4 ist in einem Ventilgehäuse 5 des Stellventils 2 ausgebildet.

Beispielsweise verfügt das Ventilgehäuse 5 über einen Wandaufsatz 6, welcher an einer den Innenraum begrenzenden Wand montierbar ist. Von dem Wandaufsatz 6 geht eine Ventilgehäusewand 7 aus, die in dem hier dargestellten Ausführungsbeispiel bereichsweise hohlzylindrisch, insbesondere hohlkreiszylindrisch ist, bevorzugt auf ihrer dem Ventilator 3 zugewandten Seite. Auf der dem Ventilator 3 abgewandten Seite weitet sich der Strömungskanal 4 auf, insbesondere kelchartig, wobei die Ventilgehäusewand 7 beispielsweise trichterförmig ist. Der Wandaufsatz 6 ist vorzugsweise mit einer Abdeckung 8 versehen, welcher mit Abstand zu dem Wandaufsatz 6 angeordnet ist, sodass zwischen der Abdeckung 8 und dem Wandaufsatz 6 ein weiterer Kanal vorliegt, über welchen der Strömungskanal 4 mit dem Innenraum in Strömungsverbindung steht. Der weitere Kanal kann als Ausströmkanal beziehungsweise Einströmkanal ausgestaltet sein.

Mithilfe der Abdeckung 8 wird durch den Strömungskanal 4 in Richtung der Abdeckung 8 beziehungsweise in Richtung des Innenraums strömendes Fluid umgelenkt. Während es den Strömungskanal 4 im Wesentlichen in axialer Richtung bezüglich einer Längsmittelachse des Strömungskanals 4 durchströmt, wird es von der Abdeckung 8 umgelenkt, sodass es bezüglich der Längsmittelachse in radialer Richtung nach außen strömt und in den Innenraum gelangt. Wird umgekehrt das Fluid aus dem Innenraum herausgefördert, so strömt es zunächst in radialer Richtung in die Lüftungseinrichtung 1 ein und wird nachfolgend umgelenkt, sodass es den Strömungskanal 4 wiederum in axialer Richtung durchströmt.

Dem Strömungskanal 4 ist ein Ventilelement 9 zugeordnet, mittels welchem eine Durchströmungsquerschnittsfläche des Strömungskanals 4 einstellbar ist. Das Einstellen der Durchströmungsquerschnittsfläche des Strömungskanals 4 erfolgt durch ein Verlagern des Ventilelements 9 in axialer Richtung bezüglich der Längsmittelachse des Strömungskanals 4. In einer ersten Axialstellung des Ventilelements 9 bezüglich des Ventilgehäuses 5 liegt zwischen dem Ventilelement 9 und dem Ventilgehäuse 5 ein erster Abstand vor, bei welchem eine erste Durchströmungsquerschnittsfläche des Strömungskanals 4 beziehungsweise ein erster Durchströmungsquerschnittsflächeninhalt gegeben ist. Bei einer zweiten Axialstellung liegt hingegen ein von dem ersten Abstand verschiedener zweiter Abstand des Ventilelements 9 zu dem Ventilgehäuse 5 vor, sodass sich eine zweite Durchströmungsquerschnittsfläche beziehungsweise ein zweiter Durchströmungsquerschnittsflächeninhalt einstellt, welche beziehungsweise welcher von der ersten Durchströmungsquerschnittsfläche beziehungsweise dem zweiten Durchströmungsquerschnittsflächeninhalt verschieden ist.

Das Verlagern des Ventilelements 9 in axialer Richtung wird über eine Getriebeeinrichtung 10 mittels eines Stellantriebs 11 bewirkt. In anderen Worten ist das Ventilelement 9 über die Getriebeeinrichtung 10 an den Stellantrieb 11 antriebstechnisch angebunden. Der Stellantrieb 11 liegt in Form eines elektrischen Stellmotors 12 vor oder weist einen solchen zumindest auf. Die Getriebeeinrichtung 10 ist dazu vorgesehen und ausgestaltet, eine Drehbewegung des Stellmotors 12 in die axiale Verlagerung des Ventilelements 9 umzusetzen. Der Stellantrieb 11 ist in einem Antriebsgehäuse 13 angeordnet. Das Antriebsgehäuse 13 ist mittels wenigstens eines Haltestegs 14 (in dem hier dargestellten Ausführungsbeispiel mittels mehrerer Haltestege 14) in dem Strömungskanal 4 gehalten. Konkret ist mittels des wenigstens einen Haltestegs 14 ein Aufnahmeelement 15 in dem Strömungskanal 4 angeordnet, welches das Antriebsgehäuse 13 aufnimmt und hält. Das Aufnahmeelement 15 ist beispielsweise zumindest bereichsweise im Schnitt U-förmig ausgestaltet und zur Aufnahme des Antriebsgehäuses 13 vorgesehen und ausgestaltet. In dem Antriebsgehäuse 13 ist im Übrigen auch ein Antriebsmotor 16 (hier lediglich andeutungsweise zu erkennen) angeordnet, mittels welchem der Ventilator 3 zumindest zeitweise angetrieben wird.

An dem Aufnahmeelement 15 ist ein Deckel 17 angeordnet, welcher das Antriebsgehäuse 13 verschließt, bevorzugt fluiddicht verschließt. Der Deckel 17 weist mindestens einen Arm 18 auf, bevorzugt ebenso viele Arme 18 wie Haltestege 14 vorliegen. Die Arme 18 sind derart an dem Deckel 17 angeordnet, dass sie nach der Anordnung des Deckels 7 an dem Aufnahmeelement 15 die Haltestege 14 übergreifen. Auf diese Art und Weise begrenzen der wenigstens eine Haltesteg 14 und der Deckel 17 beziehungsweise dessen jeweiliger Arm 18 gemeinsam einen Kabelkanal 19. Der Kabelkanal 19 verbindet das Antriebsgehäuse 13 mit einer Kabelaufnahme 20, die in dem Ventilgehäuse 5 ausgebildet ist. Es ist nicht notwendig, dass jeder Haltesteg 14 gemeinsam mit dem Deckel 17 einen solchen Kabelkanal 19 ausbildet. Es kann auch vorgesehen sein, dass lediglich ein einziger Kabelkanal 19 oder zumindest weniger Kabelkanäle 19 als Haltestege 14 vorliegen. In jedem Fall übergreift jedoch der Deckel 17 den Haltesteg 14 beziehungsweise jeden der Haltestege 14, insbesondere zur Herstellung eines gefälligen Erscheinungsbilds. Zudem dient eine solche Ausgestaltung der Lüftungseinrichtung 1 einer zuverlässigen und dauerhaften Befestigung des Deckels 17 an dem Ventilgehäuse 5 beziehungsweise dem Wandaufsatz 6.

Das Antreiben des Ventilelements 9 in axialer Richtung mittels des Stellantriebs 11 beziehungsweise des Stellmotors 12 erfolgt mithilfe einer Magnetverbindungsvorrichtung 21. Mithilfe der Magnetverbindungsvorrichtung 21 wird eine kontaktlose Kraft- beziehungsweise Drehmomentübertragung zwischen dem Stellantrieb 11 und dem Ventilelement 9 erzielt. Die Magnetverbindungsvorrichtung 21 verfügt über eine erste Magnetverbindungseinrichtung 22 und eine zweite Magnetverbindungseinrichtung 23. Die erste Magnetverbindungseinrichtung 22 ist antriebstechnisch an den Stellantrieb 11 angeschlossen, wohingegen die zweite Magnetkupplungseinrichtung 23 dem Ventilelement 9 zugeordnet und bevorzugt an diesem befestigt ist.

Zwischen den Magnetverbindungseinrichtungen 22 und 23 liegt eine Magnetverbindung vor, welche durch eine Wand verläuft, insbesondere durch eine Antriebsgehäusewand 24 des Antriebsgehäuses 13 und/oder eine Aufnahmeelementwand 24' des Aufnahmeelements 15. Hierzu sind die Magnetverbindungseinrichtungen 22 und 23 nach der Montage des Stellventils 2 beziehungsweise der Lüftungseinrichtung 1 auf gegenüberliegenden Seiten der jeweiligen Wand angeordnet, nämlich die erste Magnetkupplungseinrichtung 22 in radialer Richtung innenseitig und die zweite Magnetverbindungseinrichtung 23 in radialer Richtung außenseitig von der Wand. In diesem Zusammenhang sei darauf hingewiesen, dass die Aufnahmeelementwand 24' des Aufnahmeelements 15 ebenfalls als Teil der Antriebsgehäusewand 24 angesehen werden kann, da sie bevorzugt einen von der Antriebsgehäusewand 24 in radialer Richtung nach außen begrenzten Raum bereichsweise ebenfalls in radialer Richtung nach außen begrenzt.

Die erste Magnetverbindungseinrichtung 22 verfügt über einen Grundkörper 25, an welchem eine Zahnstange 26 ausgestaltet ist. Diese Zahnstange 26 kämmt mit einem Zahnrad 27, welches drehfest mit dem Stellmotor 12 beziehungsweise einer Motorwelle 28 des Stellmotors 12 gekoppelt ist. Die Motorwelle 28 beziehungsweise eine Drehachse der Motorwelle 28 ist bezüglich einer gedachten Ebene angewinkelt, welche parallel zu der Längsmittelachse des Strömungskanals 4 verläuft. Hierunter ist zu verstehen, dass die Motorwelle 28 beziehungsweise ihre Drehachse mit der gedachten Ebene einen Winkel einschließt, der größer als 0° und kleiner als 180° ist. Bevorzugt beträgt der Winkel in etwa oder genau 90°, sodass eine senkrechte Anordnung von Motorwelle 28 und gedachter Ebene vorliegt. Die gedachte Ebene kann die Längsmittelachse in sich aufnehmen oder beabstandet parallel zu dieser vorliegen.

In dem Grundkörper 25 der ersten Magnetverbindungseinrichtung 22 ist eine Aufnahmetasche 29 ausgebildet. In dieser sind eine oder mehrere Magnetverbindungselemente 30 der ersten Magnetverbindungseinrichtung 22 angeordnet. Auch die zweite Magnetkupplungseinrichtung 23 verfügt über eines oder mehrere Magnetverbindungselemente 31. Diese sind in einer Aufnahmetasche 32 angeordnet, die in dem Ventilelement 9 selbst ausgestaltet ist. Insbesondere weist die Aufnahmetasche 32 in axialer Richtung bezüglich der Längsmittelachse des Strömungskanals 4 ihre größten Abmessungen auf. Vorzugsweise ist die Aufnahmetasche 32 in radialer Richtung nach innen und nach außen von dem Ventilelement 9 begrenzt. Zudem ist die Aufnahmetasche 32 auch in axialer Richtung einerseits von dem Ventilelement 9 begrenzt. Andererseits ist die Aufnahmetasche 32 jedoch offen, sodass im Querschnitt gesehen die Aufnahmetasche 32 von einer von dem Ventilelement 9 ausgebildeten U-förmigen Begrenzung begrenzt ist. Das in der Aufnahmetasche 32 angeordnete Magnetverbindungselemente 31 ist fest mit dem Ventilelement 9 verbunden. Beispielsweise ist es hierzu kraftschlüssig in die Aufnahmetasche 32 eingepresst und/oder stoffschlüssig mit dem Ventilelement 9 verbunden, beispielsweise mittels Klebstoff.

Es ist erkennbar, dass der Ventilator 3 ein Laufrad 33 aufweist. Zusätzlich kann ein hier nicht dargestelltes Leitrad vorliegen, welches bevorzugt auf der dem Stellventil 2 abgewandten Seite des Laufrads 33 angeordnet ist. Das Laufrad 33 verfügt über mehrere Laufradschaufeln 34, von welchen hier lediglich einige gekennzeichnet sind. Die Laufradschaufeln 34 gehen von einem Grundkörper 35 des Laufrads 33 aus, welches im Wesentlichen topfförmig ist und nach der Montage der Lüftungseinrichtung 1 das Aufnahmeelement 15 zur Lagerung des Laufrads 33 umgreift. Es ist erkennbar, dass an dem Antriebsmotor 16 ein Adapter 36 angeordnet beziehungsweise fest mit einer Motorwelle des Antriebsmotor 16 starr verbunden ist. Über den Adapter 36 ist eine antriebstechnische Verbindung zwischen dem Antriebsmotor 16 und dem Laufrad 33 hergestellt. Hierzu greift der Adapter 36 formschlüssig in eine Adapteraufnahme 37 des Laufrads 33 ein. Die Adapteraufnahme 37 liegt an einer Stirnseitenwand 38 des Laufrads 33 vor, von welchem der zumindest bereichsweise zylindrische Grundkörper 35 ausgeht. Der Grundkörper 35 ist hierbei vorzugsweise kreiszylindrisch beziehungsweise hohlkreiszylindrisch.

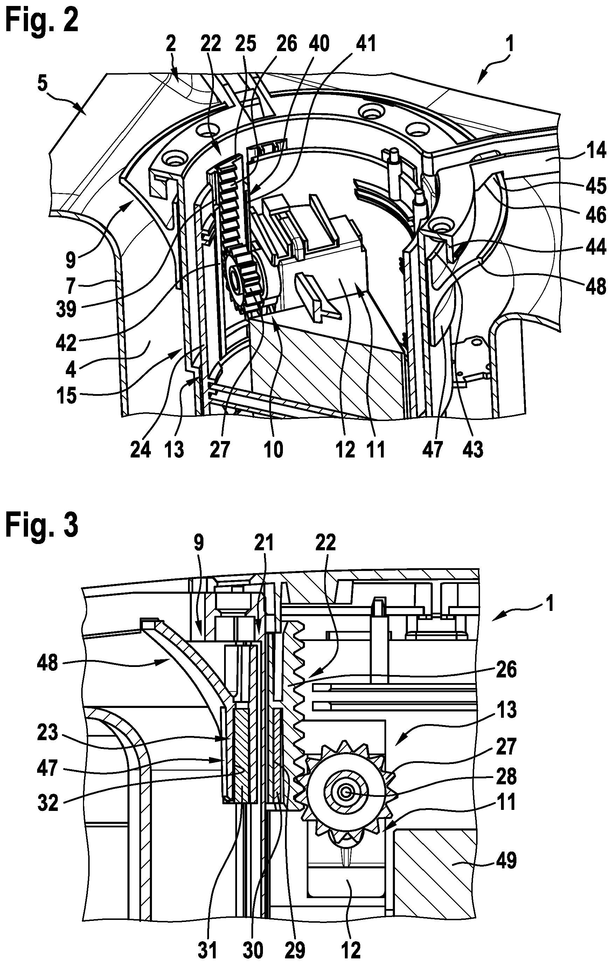

Die Figur 2 zeigt eine schematische Detaildarstellung der Lüftungseinrichtung 1, nämlich unter anderem des in dem Antriebsgehäuse 13 angeordneten Stellantriebs 11. Bei dem Stellmotor 12 des Stellantriebs 11 handelt es sich vorzugsweise um einen Servomotor, insbesondere um einen Modellbau-Servomotor. Dieser hat beispielsweise ein Nenndrehmoment von höchstens 100 Ncm, höchstens 75 Ncm, höchstens 50 Ncm oder höchstens 25 Ncm. Besonders bevorzugt ist das Nenndrehmoment des Stellantriebs 11 beziehungsweise des Servomotors jedoch geringer, insbesondere beträgt es höchstens 15 Ncm, höchstens 10 Ncm oder höchstens 5 Ncm.

In der Antriebsgehäusewand 24 ist wenigstens eine Aussparung 39 ausgebildet. In der Aussparung 39 ist die erste Magnetverbindungseinrichtung 22 längsverschieblich angeordnet. Insbesondere durchgreift die erste Magnetverbindungseinrichtung 22 die Aussparung 39, sodass zumindest ein Teil der Zahnstange 26 durch die Aussparung 39 in das Antriebsgehäuse 13 hineinragt. Die erste Magnetkupplungseinrichtung 22 beziehungsweise ihr Grundkörper 25 ist bevorzugt in einer Führungsausnehmung 40 längsverschieblich gelagert, nämlich bevorzugt in axialer Richtung beziehungsweise parallel zu der Längsmittelachse.

Die Führungsausnehmung 40 wird auf gegenüberliegenden Seiten von zwei Führungsschienen 41 und 42 begrenzt, welche die erste Magnetverbindungseinrichtung 22 zwischen sich aufnehmen. Vorzugsweise sind die Führungsschienen 41 und 42 derart ausgestaltet, dass die erste Magnetkupplungseinrichtung 22 mit Hintergriff zwischen ihnen gehalten ist, sodass also die erste Magnetkupplungseinrichtung 22 sowohl in Umfangsrichtung als auch in radialer Richtung von den Führungsschienen 41 und 42, insbesondere in Zusammenwirkung mit der Aufnahmeelementwand 24', gehalten ist und die Führungsschienen 41 und 42, bevorzugt zusammen mit der Aufnahmeelementwand 24', eine Verlagerung der ersten Magnetverbindungseinrichtung 92 lediglich in axialer Richtung zulassen. Es kann vorgesehen sein, dass die Führungsschienen 41 und 42 ebenfalls in der Aussparung 39 angeordnet sind beziehungsweise diese zumindest teilweise oder sogar vollständig durchgreifen.

Das Ventilelement 9 ist hier in einer zumindest teilweise geöffneten Axialstellung des Stellventils 2 dargestellt. In dieser Axialstellung greift es beispielsweise in eine Ringausnehmung 43 ein, die von einem Ringkragen 44 des Aufnahmeelement 15 in radialer Richtung nach außen begrenzt ist. Insoweit liegt die Ringausnehmung 43 in radialer Richtung gesehen zwischen der Aufnahmeelementwand 24' und dem Ringkragen 44 vor. Zusätzlich oder alternativ zu der Ringausnehmung 43 ist in dem Haltesteg 14, insbesondere in allen Haltestegen 14, jeweils eine Ventilelementaufnahme 44 ausgestaltet, in welche das Ventilelement 9 in wenigstens einer Axialstellung eingreift, insbesondere in der hier dargestellten zumindest teilweise geöffneten Axialstellung. Die Ventilelementaufnahme 45 ist in radialer Richtung gesehen wenigstens einerseits von einer Einlaufschräge 46 begrenzt, welche bei einer Anordnung des Ventilelements 9 in der Ventilelementaufnahme 45 für eine Zentrierung des Ventilelements 9 bezüglich der Längsmittelachse des Strömungskanals 4 sorgt.

Das Ventilelement 9 weist einen Führungsbereich 47 und einen Ventilbereich 48 auf. Der Ventilbereich 47 ist im Wesentlichen zylinderförmig beziehungsweise hohlzylinderförmig ausgestaltet und liegt mit seiner Innenumfangsfläche an einer Außenumfangsfläche des Aufnahmeelements 15 beziehungsweise dessen Aufnahmeelementwand 24' an, um eine zuverlässige Lagerung des Ventilelements 9 bezüglich des Ventilgehäuses 5 umzusetzen. Die Lagerung ist dabei derart ausgestaltet, dass sie eine Verlagerung des Ventilelements 9 lediglich in axialer Richtung zulässt, also eine Verlagerung des Ventilelements 9 in radialer Richtung und/oder in Umfangsrichtung unterbindet. Der Ventilbereich 48 erstreckt sich ausgehend von dem Führungsbereich 47 in radialer Richtung nach außen. Vorzugsweise geht er hierbei in etwa mittig von dem Führungsbereich 47 aus, um ein Verkippen des Ventilelements 9 zuverlässig zu verhindern. Der Ventilbereich 48 wirkt mit einem Bereich des Ventilgehäuses 5 beziehungsweise der Ventilgehäusewand 7 zusammen, welcher als Ventilsitz dient, um die gewünschte Durchströmungsquerschnittsfläche einzustellen.

Die Figur 3 zeigt eine weitere schematische Schnittdarstellung der Lüftungseinrichtung 1, wobei insbesondere der Stellantrieb 11 in dem Antriebsgehäuse 13, das Ventilelement 9 sowie die Magnetverbindungsvorrichtung 21 mit den beiden Magnetverbindungseinrichtungen 22 und 23 zu erkennen sind. Eine Ansteuerelektronik 49, welche einer Ansteuerung und/oder einer Energieversorgung des Stellmotors 12 dient, ist ebenfalls in dem Antriebsgehäuse 13 angeordnet. Im Übrigen ist auch der Antriebsmotor 16 zum Antreiben des Ventilators 3 in dem Antriebsgehäuse 13 angeordnet. Der Stellmotor 12 und Antriebsmotor 16 sind hierbei derart angeordnet, dass ihre Wellen windschief zueinander angeordnet sind oder einander unter einem bestimmten Winkel schneiden. In jedem Fall weisen sie keine Drehachsen auf, welche ineinander liegen oder parallel zueinander angeordnet sind. In dem hier dargestellten Ausführungsbeispiel steht die Drehachse der Motorwelle 28 senkrecht auf einer gedachten Ebene, welche parallel zu der Drehachse des Antriebsmotor 16 vorliegt. Das bedeutet schlussendlich, dass bevorzugt die Drehachse des Antriebsmotor 16 parallel zu der Längsmittelachse des Strömungskanals 4 angeordnet ist oder mit ihr zusammenfällt.

Die beschriebene Ausgestaltung der Lüftungseinrichtung 1 hat den Vorteil, dass eine Kapselung des Stellantriebs 11 gegenüber äußeren Einflüssen auf einfache Art und Weise erzielt ist. Zudem bietet die Verwendung der Magnetverbindungsvorrichtung 21 den Vorteil, dass ein Festsetzen des Ventilelements 9 nicht zu einer Beschädigung des Stellantriebs 11 führt, da die Magnetverbindungsvorrichtung 21 als eine Art Überlastkupplung arbeitet.

### BEZUGSZEICHENLISTE

- 1: Lüftungseinrichtung
- 2: Stellventil
- 3: Ventilator
- 4: Strömungskanal
- 5: Ventilgehäuse
- 6: Wandaufsatz
- 7: Ventilgehäusewand
- 8: Abdeckung
- 9: Ventilelement
- 10: Getriebeeinrichtung
- 11: Stellantrieb
- 12: Stellmotor
- 13: Antriebsgehäuse
- 14: Haltesteg
- 15: Aufnahmeelement
- 16: Antriebsmotor
- 17: Deckel
- 18: Arm
- 19: Kabelkanal
- 20: Kabelaufnahme
- 21: Magnetverbindungsvorrichtung
- 22: erste Magnetverbindungseinrichtung
- 23: zweite Magnetverbindungseinrichtung
- 24: Antriebsgehäusewand
- 24': Aufnahmeelementwand
- 25: Grundkörper
- 26: Zahnstange
- 27: Zahnrad
- 28: Motorwelle
- 29: Aufnahmetasche
- 30: Magnetverbindungselement
- 31: Magnetverbindungselement
- 32: Aufnahmetasche
- 33: Laufrad
- 34: Laufradschaufeln
- 35: Grundkörper
- 36: Adapter
- 37: Adapteraufnahme
- 38: Wand
- 39: Aussparung
- 40: Führungsausnehmung
- 41: Führungsschiene
- 42: Führungsschiene
- 43: Ringausnehmung
- 44: Ringkragen
- 45: Ventilelementaufnahme
- 46: Einlaufschräge
- 47: Führungsbereich
- 48: Ventilbereich
- 49: Ansteuerelektronik

## Patentansprüche

1. Stellventil (2), insbesondere für eine Lüftungseinrichtung (1), mit einem in einem Ventilgehäuse (5) des Stellventils (2) ausgebildeten Strömungskanal (4), wobei in dem Strömungskanal (4) ein Ventilelement (9) zum Einstellen einer Durchströmungsquerschnittsfläche des Strömungskanals (4) angeordnet ist, wobei
- das Ventilelement (9) bezüglich einer Längsmittelachse des Strömungskanals (4) axial verlagerbar ist und mit einem Ventilsitz in einer ersten Axialstellung zum Einstellen einer ersten Durchströmungsquerschnittsfläche des Strömungskanals (4) und in einer zweiten Axialstellung zum Einstellen einer von der ersten Durchströmungsquerschnittsfläche verschiedenen zweiten Durchströmungsquerschnittsfläche des Strömungskanals (4) zusammenwirkt, **dadurch gekennzeichnet, dass**
- das Ventilelement bezüglich der Längsmittelachse des Strömungskanals (4) in Umfangsrichtung mittels einer Führungseinrichtung festgesetzt und in axialer Richtung mittels eines einen elektrischen Stellmotor (12) aufweisenden Stellantriebs (11) antreibbar ist, wobei
- der Stellantrieb (11) kontaktlos über eine Magnetverbindungsvorrichtung (21) antriebstechnisch an das Ventilelement (9) angeschlossen ist, wobei die Magnetverbindungsvorrichtung (21) eine an den Stellantrieb (11) antriebstechnisch angebundene erste Magnetverbindungseinrichtung (22) und eine magnetisch mit der ersten Magnetverbindungseinrichtung (21) zusammenwirkende und an das Ventilelement (9) antriebstechnisch angebundene zweite Magnetverbindungseinrichtung (23) aufweist, sodass die erste Magnetverbindungseinrichtung (22) lediglich mittelbar über die zweite Magnetverbindungseinrichtung (23) mit dem Ventilelement (9) antriebstechnisch verbunden ist, und wobei
- der Stellantrieb (11) in einer Stellantriebsaufnahme eines in dem Strömungskanal (4) vorliegenden Antriebsgehäuses (13 angeordnet ist, wobei die erste Magnetverbindungseinrichtung (22) einerseits einer Wand (24, 24') und die zweite Magnetverbindungseinrichtung (23) andererseits der Wand (24, 24') angeordnet ist, sodass zwischen den Magnetverbindungseinrichtungen (22, 23) eine durch die Wand (24, 24') verlaufende Magnetverbindung vorliegt.

2. Stellventil nach Anspruch 1, **dadurch gekennzeichnet, dass** das Antriebsgehäuse (13) über wenigstens einen Haltesteg (14) derart in dem Strömungskanal (4) angeordnet ist, dass der Strömungskanal (4) das Antriebsgehäuse (13) in Umfangsrichtung vollständig umgreift.

3. Stellventil nach einem der vorhergehenden Ansprüche, **dadurch gekennzeichnet, dass** der wenigstens eine Haltesteg (14) ein Aufnahmeelement (15) trägt, in dem das Antriebsgehäuse (13) angeordnet ist, wobei das Antriebsgehäuse (13) mit einem an dem Aufnahmeelement (15) befestigten Deckel (17) verschlossen ist.

4. Stellventil nach einem der vorhergehenden Ansprüche, **dadurch gekennzeichnet, dass** der wenigstens eine Haltesteg (14) und der Deckel (17) gemeinsam einen Kabelkanal (19) begrenzen, der einerseits in das Antriebsgehäuse (13) und andererseits in eine abseits des Strömungskanals (4) in dem Ventilgehäuse (5) ausgebildete Kabelaufnahme (20) einmündet.

5. Stellventil nach einem der vorhergehenden Ansprüche, **dadurch gekennzeichnet, dass** der Haltesteg (14) eine Ventilelementaufnahme (45) aufweist, in die das Ventilelement (9) in wenigstens einer Axialstellung eingreift.

6. Stellventil nach einem der vorhergehenden Ansprüche, **dadurch gekennzeichnet, dass** der Deckel (17) von einer Abdeckung (8) des Stellventils (2) übergriffen ist, der mit dem Haltesteg (14) und/oder dem Ventilgehäuse (5) bündig abschließt oder über sie übersteht.

7. Stellventil nach einem der vorhergehenden Ansprüche, **dadurch gekennzeichnet, dass** der Stellmotor (12) eine um eine Motordrehachse drehbare Motorwelle (28) aufweist, wobei die Motordrehachse bezüglich einer zu der Längsmittelachse des Strömungskanals (4) parallelen Ebene angewinkelt ist.

8. Stellventil nach einem der vorhergehenden Ansprüche, **dadurch gekennzeichnet, dass** die Motorwelle (28) des Stellmotors (12) mit einem Zahnrad (27) gekoppelt ist, das mit einer Zahnstange (26) der ersten Magnetverbindungseinrichtung (22) in Eingriff steht.

9. Stellventil nach einem der vorhergehenden Ansprüche, **dadurch gekennzeichnet, dass** die erste Magnetverbindungseinrichtung (22) in einer Führungsausnehmung (40) linear verlagerbar gelagert ist.

10. Stellventil nach einem der vorhergehenden Ansprüche, **dadurch gekennzeichnet, dass** die erste Magnetverbindungseinrichtung (22) eine Aufnahmetasche (29) aufweist, in der wenigsten ein Magnetverbindungselement (30) angeordnet ist.

11. Stellventil nach einem der vorhergehenden Ansprüche, **dadurch gekennzeichnet, dass** das Ventilelement (9) einen an dem Antriebsgehäuse (13) und/oder dem Aufnahmeelement (15) anliegenden zylindrischen Führungsbereich (47) und einen von dem Führungsbereich (47) fortgeneigten Ventilbereich (48) aufweist, der der mit dem Ventilsitz zum Einstellen der unterschiedlichen Strömungsquerschnittsfläche des Strömungskanals (4) zusammenwirkt.

12. Stellventil nach einem der vorhergehenden Ansprüche, **dadurch gekennzeichnet, dass** die erste Magnetverbindungseinrichtung (22) und die zweite Magnetverbindungseinrichtung (23) jeweils mehrere magnetisch miteinander zusammenwirkende Magnetverbindungselemente (30, 31) aufweisen.

13. Verfahren zum Betreiben eines Stellventils (2), insbesondere eines Stellventils (2) nach einem oder mehreren der vorhergehenden Ansprüche, wobei das Stellventil (2) über einen in einem Ventilgehäuse (5) des Stellventils (2) ausgebildeten Strömungskanal (4) verfügt, in dem ein Ventilelement (9) zum Einstellen einer Durchströmungsquerschnittsfläche des Strömungskanals (4) angeordnet ist, wobei
- das Ventilelement (9) bezüglich einer Längsmittelachse des Strömungskanals (4) zumindest zeitweise axial verlagert wird und mit einem Ventilsitz in einer ersten Axialstellung zum Einstellen einer ersten Durchströmungsquerschnittsfläche des Strömungskanals (4) und in einer zweiten Axialstellung zum Einstellen einer von der ersten Durchströmungsquerschnittsfläche verschiedenen zweiten Durchströmungsquerschnittsfläche des Strömungskanals (4) zusammenwirkt, **dadurch gekennzeichnet, dass**
- das Ventilelement (9) bezüglich der Längsmittelachse des Strömungskanals (4) in Umfangsrichtung mittels einer Führungseinrichtung festgesetzt und in axialer Richtung zumindest zeitweise mittels eines einen elektrischen Stellmotor (12) aufweisenden Stellantriebs (11) angetrieben wird, wobei
- der Stellantrieb (11) kontaktlos über eine Magnetverbindungsvorrichtung (21) antriebstechnisch an das Ventilelement (9) angeschlossen ist, wobei die Magnetverbindungsvorrichtung (21) eine an den Stellantrieb (11) antriebstechnisch angebundene erste Magnetverbindungseinrichtung (22) und eine magnetisch mit der ersten Magnetverbindungseinrichtung (22) zusammenwirkende und an das Ventilelement (9) antriebstechnisch angebundene zweite Magnetverbindungseinrichtung (23) aufweist, sodass die erste Magnetkupplungseinrichtung (22) lediglich mittelbar über die zweite Magnetverbindungseinrichtung (23) mit dem Ventilelement (9) antriebstechnisch verbunden ist, und wobei
- der Stellantrieb (11) in einer Stellantriebsaufnahme eines in dem Strömungskanal (4) vorliegenden Antriebsgehäuses (13) angeordnet ist, wobei die erste Magnetverbindungseinrichtung (22) einerseits einer Wand (24, 24') und die zweite Magnetverbindungseinrichtung (23) andererseits der Wand (24, 24') angeordnet ist, sodass zwischen den Magnetverbindungseinrichtungen (22, 23) eine durch die Wand (24, 24') verlaufende Magnetverbindung vorliegt.

14. Lüftungseinrichtung (1) mit einem Stellventil (2) nach einem oder mehreren der Ansprüche 1 bis 12.

15. Lüftungseinrichtung nach Anspruch 14, **gekennzeichnet durch** einen Ventilator (3) der zur Förderung eines Fluidstroms durch den Strömungskanal (4) vorgesehen und ausgestaltet ist.

## Claims

1. Control valve (2), in particular for a ventilation device (1), with a flow channel (4) configured in a valve housing (5) of the control valve (2), wherein a valve element (9) for setting a flow cross-sectional area of the flow channel (4) is arranged in the flow channel (4), wherein
- the valve element (9) is shiftable axially relative to a longitudinal central axis of the flow channel (4) and interacts with a valve seat in a first axial position for setting a first flow cross-sectional area of the flow channel (4) and in a second axial position for setting a second flow cross-sectional area of the flow channel (4) which differs from the first flow cross-sectional area, **characterised in that**
- the valve element is fixed in the circumferential direction relative to the longitudinal central axis of the flow channel (4) by means of a guide device and is driveable in the axial direction by means of an actuator (11) comprising an electric actuator motor (12), wherein
- the actuator (11) is propulsively connected to the valve element (9) in a contactless manner via a magnetic connection apparatus (21), wherein the magnetic connection apparatus (21) comprises a first magnetic connection device (22) propulsively connected to the actuator (11) and a second magnetic connection device (23), which interacts with the first magnetic connection device (21) and is propulsively connected to the valve element (9), so that the first magnetic connection device (22) is propulsively connected to the valve element (9) only indirectly via the second magnetic connection device (23), and wherein
- the actuator (11) is arranged in an actuator receptacle of a drive housing (13) present in the flow channel (4), wherein the first magnetic connection device (22) is arranged on one side of a wall (24, 24') and the second magnetic connection device (23) is arranged on the other side of the wall (24, 24'), so that a magnetic connection passing through the wall (24, 24') is present between the magnetic connection devices (22, 23).

2. Control valve according to claim 1, **characterised in that** the drive housing (13) is arranged in the flow channel (4) via at least one retaining bar (14) in such a way that the flow channel (4) completely surrounds the drive housing (13) in the circumferential direction.

3. Control valve according to one of the preceding claims, **characterised in that** the at least one retaining bar (14) carries a receiving element (15) in which the drive housing (13) is arranged, wherein the drive housing (13) is closed with a lid (17) fastened to the receiving element (15).

4. Control valve according to one of the preceding claims, **characterised in that** the at least one retaining bar (14) and the lid (17) together delimit a cable duct (19) which opens into the drive housing (13) on one side and into a cable receptacle (20) configured in the valve housing (5) away from the flow channel (4) on the other side.

5. Control valve according to one of the preceding claims, **characterised in that** the retaining bar (14) comprises a valve element receptacle (45) into which the valve element (9) engages in at least one axial position.

6. Control valve according to one of the preceding claims, **characterised in that** the lid (17) is covered by a cover (8) of the control valve (2), which is flush with or protrudes above the retaining bar (14) and/or the valve housing (5).

7. Control valve according to one of the preceding claims, **characterised in that** the actuator motor (12) comprises a motor shaft (28) rotatable about a motor axis of rotation, wherein the motor axis of rotation is angled relative to a plane parallel to the longitudinal central axis of the flow channel (4).

8. Control valve according to one of the preceding claims, **characterised in that** the motor shaft (28) of the actuator motor (12) is coupled to a gear wheel (27) which engages with a gear rack (26) of the first magnetic connection device (22).

9. Control valve according to one of the preceding claims, **characterised in that** the first magnetic connection device (22) is mounted linearly shiftable in a guide recess (40).

10. Control valve according to one of the preceding claims, **characterised in that** the first magnetic connection device (22) comprises a receiving pocket (29) in which at least one magnetic connection element (30) is arranged.

11. Control valve according to one of the preceding claims, **characterised in that** the valve element (9) has a cylindrical guide region (47) adjacent to the drive housing (13) and/or the receiving element (15) and a valve region (48) inclined away from the guide area (47), which interacts with the valve seat for setting the different flow cross-sectional area of the flow channel (4).

12. Control valve according to one of the preceding claims, **characterised in that** the first magnetic connection device (22) and the second magnetic connection device (23) each comprise several magnetically interacting magnetic connection elements (30, 31).

13. Method for operating a control valve (2), in particular a control valve (2) according to one or more of the preceding claims, wherein the control valve (2) has a flow channel (4) configured in a valve housing (5) of the control valve (2), in which a valve element (9) for setting a flow cross-sectional area of the flow channel (4) is arranged, wherein
- the valve element (9) is at least temporarily shifted axially relative to a longitudinal central axis of the flow channel (4) and interacts with a valve seat in a first axial position for setting a first flow cross-sectional area of the flow channel (4) and in a second axial position for setting a second flow cross-sectional area of the flow channel (4) which differs from the first flow cross-sectional area, **characterised in that**
- the valve element (9) is fixed in the circumferential direction relative to the longitudinal central axis of the flow channel (4) by means of a guide device and is driven in the axial direction at least temporarily by means of an actuator (11) comprising an electric actuator motor (12), wherein
- the actuator (11) is propulsively connected to the valve element (9) in a contactless manner via a magnetic connection apparatus (21), wherein the magnetic connection apparatus (21) comprises a first magnetic connection device (22) propulsively connected to the actuator (11) and a second magnetic connection device (23), which interacts with the first magnetic connection device (21) and is propulsively connected to the valve element (9), so that the first magnetic connection device (22) is propulsively connected to the valve element (9) only indirectly via the second magnetic connection device (23), and wherein
- the actuator (11) is arranged in an actuator receptacle of a drive housing (13) present in the flow channel (4), wherein the first magnetic connection device (22) is arranged on one side of a wall (24, 24') and the second magnetic connection device (23) is arranged on the other side of the wall (24, 24'), so that a magnetic connection passing through the wall (24, 24') is present between the magnetic connection devices (22, 23).

14. Ventilation device (1) with a control valve (2) according to one or more of claims 1 to 12.

15. Ventilation device according to claim 14, **characterised by** a fan (3) which is provided and configured to convey a fluid flow through the flow channel (4).

## Revendications

1. Vanne de réglage (2), en particulier pour un dispositif de ventilation (1), comprenant un canal d'écoulement (4) réalisé dans un boîtier de vanne (5) de la vanne de réglage (2), dans laquelle un élément de vanne (9) permettant d'ajuster une section transversale d'écoulement du canal d'écoulement (4) est agencé dans le canal d'écoulement (4), dans laquelle
- l'élément de vanne (9) peut être déplacé axialement par rapport à un axe médian longitudinal du canal d'écoulement (4) et coopère avec un siège de vanne dans une première position axiale permettant d'ajuster une première section transversale d'écoulement du canal d'écoulement (4) et dans une seconde position axiale permettant d'ajuster une seconde section transversale d'écoulement du canal d'écoulement (4) différente de la première section transversale d'écoulement, **caractérisée en ce que**
- l'élément de vanne est fixé dans la direction circonférentielle par rapport à l'axe médian longitudinal du canal d'écoulement (4) au moyen d'un dispositif de guidage et peut être entraîné dans la direction axiale au moyen d'un actionneur (11) présentant un servomoteur électrique (12), dans laquelle
- l'actionneur (11) est connecté sans contact en termes d'entrainement à l'élément de vanne (9) par l'intermédiaire d'un dispositif de connexion magnétique (21), dans laquelle le dispositif de connexion magnétique présente un premier dispositif de connexion magnétique (22) relié en termes d'entrainement à l'actionneur (11) et un second dispositif de connexion magnétique (23) coopérant magnétiquement avec le premier dispositif de connexion magnétique (21) et relié en termes d'entrainement à l'élément de vanne (9), de sorte que le premier dispositif de connexion magnétique (22) n'est relié en termes d'entrainement à l'élément de vanne (9) que par l'intermédiaire du second dispositif de connexion magnétique (23), et dans laquelle
- l'actionneur (11) est agencé dans un logement d'actionneur d'un boîtier d'entraînement (13) présent dans le canal d'écoulement (4), dans laquelle le premier dispositif de connexion magnétique est agencé d'un côté d'une paroi (24, 24') et le second dispositif de connexion magnétique (23) est agencé de l'autre côté de la paroi (24, 24') de sorte qu'une connexion magnétique s'étendant à travers la paroi (24, 24') existe entre les dispositifs de connexion magnétique (22, 23).

2. Vanne de réglage selon la revendication 1, **caractérisée en ce que** le boîtier d'entraînement (13) est agencé dans le canal d'écoulement (4) par l'intermédiaire d'au moins une barrette de retenue (14) de telle manière que le canal d'écoulement (4) entoure complètement le boîtier d'entraînement (13) dans la direction circonférentielle.

3. Vanne de réglage selon l'une quelconque des revendications précédentes, **caractérisée en ce que** la au moins une barrette de retenue (14) supporte un élément de réception (15) au sein duquel est agencé le boîtier d'entraînement (13), dans laquelle le boîtier d'entraînement (13) est fermé par un couvercle (17) fixé à l'élément de réception (15).

4. Vanne de réglage selon l'une quelconque des revendications précédentes, **caractérisée en ce que** la au moins une barrette de retenue (14) et le couvercle (17) délimitent ensemble un canal de câble (19) qui débouche d'une part dans le boîtier d'entraînement (13) et d'autre part dans un logement de câble (20) réalisé dans le boîtier de vanne (5) à l'extérieur du canal d'écoulement (4).

5. Vanne de réglage selon l'une quelconque des revendications précédentes, **caractérisée en ce que** la barrette de retenue (14) présente un logement d'élément de vanne (45) avec lequel l'élément de vanne (9) vient en prise dans au moins une position axiale.

6. Vanne de réglage selon l'une quelconque des revendications précédentes, **caractérisée en ce que** le couvercle (17) est coiffé d'un cache (8) de la vanne de réglage (2), qui se termine en affleurant la barrette de retenue (14) et/ou le boîtier de vanne (5) ou dépasse de ceux-ci.

7. Vanne de réglage selon l'une quelconque des revendications précédentes, **caractérisée en ce que** le servomoteur (12) présente un arbre de moteur (28) pouvant tourner autour d'un axe de rotation de moteur, dans laquelle l'axe de rotation de moteur est incliné par rapport à un plan parallèle à l'axe médian longitudinal du canal d'écoulement (4).

8. Vanne de réglage selon l'une quelconque des revendications précédentes, **caractérisée en ce que** l'arbre de moteur (28) du servomoteur (12) est couplé à une roue dentée (27) qui est en prise avec une crémaillère (26) du premier dispositif de connexion magnétique (22).

9. Vanne de réglage selon l'une quelconque des revendications précédentes, **caractérisée en ce que** le premier dispositif de connexion magnétique (22) est monté de manière à pouvoir être déplacé linéairement dans un évidement de guidage (40).

10. Vanne de réglage selon l'une quelconque des revendications précédentes, **caractérisée en ce que** le premier dispositif de connexion magnétique (22) présente une poche de réception (29) au sein de laquelle est agencé au moins un élément de connexion magnétique (30).

11. Vanne de réglage selon l'une quelconque des revendications précédentes, **caractérisée en ce que** l'élément de vanne (9) présente une région de guidage (47) cylindrique adjacente au boîtier d'entraînement (13) et/ou à l'élément de réception (15), et une région de vanne (48) inclinée par rapport à la région de guidage (47) et qui coopère avec le siège de vanne afin d'ajuster la surface transversale d'écoulement, différente, du canal d'écoulement (4).

12. Vanne de réglage selon l'une quelconque des revendications précédentes, **caractérisée en ce que** le premier dispositif de connexion magnétique (22) et le deuxième dispositif de connexion magnétique (23) présentent respectivement plusieurs éléments de connexion magnétique (30, 31) coopérant magnétiquement les uns avec les autres.

13. Procédé de fonctionnement d'une vanne de réglage (2), en particulier d'une vanne de réglage (2) selon l'une quelconque ou plusieurs des revendications précédentes, dans lequel la vanne de réglage (2) dispose d'un canal d'écoulement (4) réalisé dans un boîtier de vanne (5) de la vanne de réglage (2) et au sein duquel est agencé un élément de vanne (9) permettant de régler une section transversale d'écoulement du canal d'écoulement (4), dans lequel
- l'élément de vanne (9) est déplacé de manière axiale par rapport à un axe médian longitudinal du canal d'écoulement (4) au moins temporairement et coopère avec un siège de vanne dans une première position axiale permettant d'ajuster une première section transversale d'écoulement du canal d'écoulement (4) et dans une deuxième position axiale permettant d'ajuster une deuxième section transversale d'écoulement du canal d'écoulement (4) différente de la première section transversale d'écoulement, **caractérisé en ce que**
- l'élément de vanne est fixé dans la direction circonférentielle par rapport à l'axe médian longitudinal du canal d'écoulement (4) au moyen d'un dispositif de guidage et est entraîné dans la direction axiale au moins temporairement au moyen d'un actionneur (11) présentant un servomoteur électrique (12), dans lequel
- l'actionneur (11) est connecté sans contact en termes d'entrainement à l'élément de vanne (9) par l'intermédiaire d'un dispositif de connexion magnétique (21), dans lequel le dispositif de connexion magnétique présente un premier dispositif de connexion magnétique (22) relié en termes d'entrainement à l'actionneur (11) et un second dispositif de connexion magnétique (23) coopérant magnétiquement avec le premier dispositif de connexion magnétique (21) et relié en termes d'entrainement à l'élément de vanne (9), de sorte que le premier dispositif de couplage magnétique (22) n'est relié en termes d'entrainement à l'élément de vanne (9) que par l'intermédiaire du second dispositif de connexion magnétique (23), et dans lequel
- l'actionneur (11) est agencé dans un logement d'actionneur d'un boîtier d'entraînement (13) présent dans le canal d'écoulement (4), dans lequel le premier dispositif de connexion magnétique est agencé d'un côté d'une paroi (24, 24') et le second dispositif de connexion magnétique (23) est agencé de l'autre côté de la paroi (24, 24') de sorte qu'une connexion magnétique s'étendant à travers la paroi (24, 24') existe entre les dispositifs de connexion magnétique (22, 23).

14. Dispositif de ventilation (1), comprenant une vanne de réglage (2) selon l'une quelconque ou plusieurs des revendications 1 à 12.

15. Dispositif de ventilation selon la revendication 14, **caractérisé par** un ventilateur (3) qui est prévu et conçu pour transporter un flux de fluide à travers le canal d'écoulement (4).
